# EUROPEAN PATENT APPLICATION

(11) **EP 2 437 569 A1**
(43) Date of publication of application: **04.04.2012**
(21) Application number: 09846036.3
(22) Date of filing: 27.11.2009
(51) Int. Cl.: H04W 88/00

(54) **METHOD AND TERMINAL FOR DATA TRANSMISSION**

(30) Priority: 30.06.2009 CN 200910151553
(71) Applicant: ZTE Corporation, Shenzhen, Guangdong 518057 (CN)
(72) Inventor: LI, Fei, Shenzhen Guangdong 518057 (CN)
(74) Representative: Newell, William Joseph
(86) International application number: PCT/CN2009/075180
(87) International publication number: WO 2010/145122

(57) **Abstract**

The disclosure discloses a method and terminal for data transmission. The method comprises: receiving a connection establishment request from an application processor by a communication processor; sending a response for indicating that the connection establishment is successful to the application processor and instructing a multiplexing module of the application processor to allocate a multiplexing channel via the response by the communication processor; allocating a multiplexing channel by a multiplexing module of the communication processor; and performing data transmission with the application processor through the multiplexing channel by the communication processor. The effect of a high-speed Web data transmission in a terminal can be achieved according to the disclosure.

## Description

### TECHNICAL FIELD

The disclosure relates to the field of communications, particularly to a method and terminal for data transmission.

### BACKGROUND

According to requirements of the Global Systems for Mobile Communication Association (GSMA) on a mobile telephone supporting an enhanced Near Field Communication (eNFC) technology, the mobile telephone should have a function of a Smart Card Web Server (SCWS).

The architecture of a smartphone typically comprises an Application Processor (AP) and one or more Communication Processor (CP). Wherein the AP is used for processing application programs and the like on the mobile telephone, and the application programs comprise browser, Transmission Control Protocol/Internet Protocol (TCP/IP) protocol stack, Wireless Fidelity (WiFi), bluetooth and the like; the CP takes charge of affairs related to air interfaces of a communication network, and the affairs comprise radio frequency signal processing, communication protocol stack processing, information interaction processing with a Universal Integrated Circuit Card (UICC) interface, and the like. In such a mode, a UICC interface and application programs such as browser, java program and the like locate in different processors, a channel between the two processors is therefore necessary for the achievement of a function, which makes it more complicated to achieve a function in this mode than in a single-processor terminal.

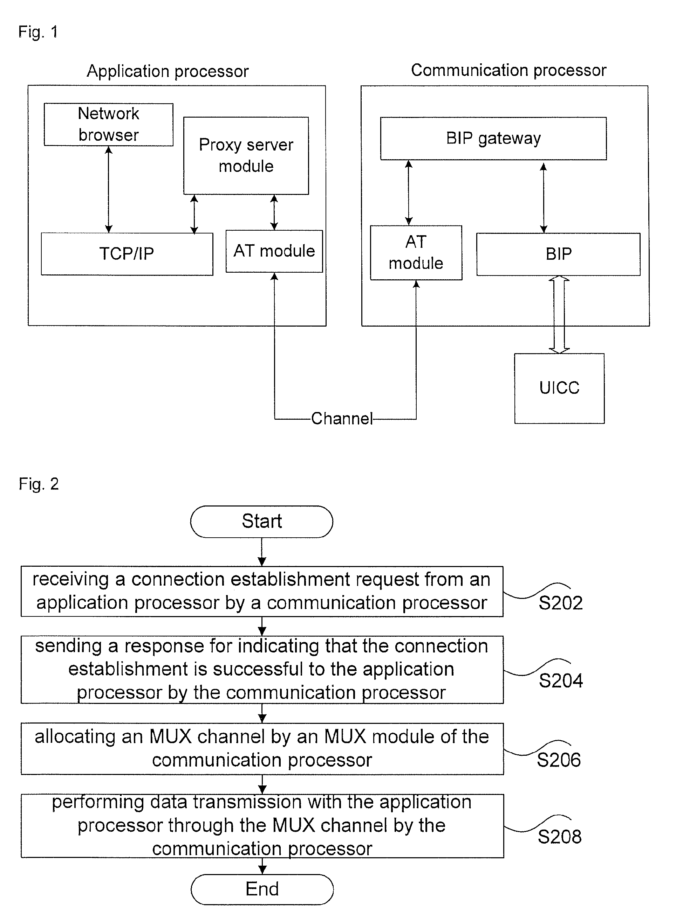

A scheme for realizing an SCWS on a multi-processor mobile terminal has been disclosed in the prior art. Fig. 1 is a structural diagram illustrating a terminal disclosed in the prior art which accesses a WEB server built in a UICC via an AT command, as shown in Fig. 1, a network browser sends a request to a proxy server module via a TCP/IP protocol, an AT module transmits the request to a CP via an AT command, and the CP forwards the request to a UICC via a Bearer Independent Protocol (BIP) gateway. It can be seen from the above that, signaling and data are both transmitted between the AP and the CP via the AT command. Because an AT command mechanism is applied between Data Terminal Equipment (DTE, i.e., an application processor) and Data Communication Equipment (DCE) and is realized by using an AT command and an AT response in pairs, however, the data transmission between a network browser and a WEB server are not certainly in a one-to-one correspondence relationship, and it is possible that there is a plurality of request response data transmitted concurrently; moreover, when being realized, a large AT command data should be divided into multiple commands to be transmitted because a single AT command is generally limited in size, thus making it necessary to convert concurrent transmission requests into serials to be processed. Due to a large data transmission amount and a low AT command transmission speed, the website display speed is quite slow when a user browses a website on a UICC.

Aiming to the problem of slow website display caused by the realization of an SCWS via an AT command in the prior art, an effective solution has not been provided.

### SUMMARY

Aiming to the problem of slow website display caused by the realization of an SCWS via an AT command in the prior art, the disclosure mainly aims to provide an improved data transmission scheme in order to solve the above problem.

In order to achieve the above-mentioned purpose, a method for data transmission is provided according to an aspect of the disclosure.

In accordance with the disclosure, the method for data transmission comprises: a communication processor receives a connection establishment request from an application processor; the communication processor sends a response for indicating that the connection establishment is successful to the application processor and instructs a multiplexing module of the application processor to allocate a multiplexing channel via the response; a multiplexing module of the communication processor allocates a multiplexing channel; and the communication processor performs data transmission with the application processor through the multiplexing channel.

Preferably, the step of instructing a multiplexing module of the application processor to allocate a multiplexing channel via the response may comprise: the multiplexing module of the application processor allocates the multiplexing channel after receiving the response.

Preferably, the method may further comprise: after the communication processor receives the connection establishment request, the communication processor sends a notice message to a Universal Integrated Circuit Card (UICC) according to the connection establishment request, wherein the notice message is used for indicating a connection to be established; the communication processor receives a channel opening request from the UICC; and the communication processor opens a channel between the communication processor and the UICC.

Preferably, the step that the communication processor performs data transmission with the application processor through the multiplexing channel may comprise: the communication processor receives data in a predefined format from the application processor via the multiplexing channel, converts the received data into data in a Bearer Independent Protocol (BIP) format, and sends the data in the BIP format to the UICC through the channel.

Preferably, the step that the communication processor performs data transmission with the application processor through the multiplexing channel may comprise: the communication processor receives data in a BIP format from the UICC through the channel, converts the data in the BIP format into data in a predefined format; and the communication processor sends the data in the predefined format to the application processor.

Preferably, the method may further comprise: after the communication processor performs data transmission with the application processor through the multiplexing channel, the communication processor receives a channel closing request from a UICC and closes a channel; and the communication processor closes the multiplexing channel and sends a command for indicating that the connection is closed to the application processor in order to close the multiplexing channel for the application processor according to the command.

In order to achieve the above-mentioned purpose, a terminal is provided according to another aspect of the disclosure.

In accordance with the disclosure, the terminal comprises an application processor and a communication processor; wherein the application processor may comprise a proxy server module and a first multiplexing module, and the communication processor may comprise a BIP gateway and a second multiplexing module; wherein the BIP gateway may be used for receiving a connection establishment request from the proxy server module; the BIP gateway may further be used for sending a response for indicating that the connection establishment is successful to the proxy server module and notifying the first multiplexing module to allocate a multiplexing channel; the proxy server module may be used for receiving the response and notifying the second multiplexing module to allocate a multiplexing channel; and the BIP gateway may further be used for performing data transmission with the proxy server module through the multiplexing channel.

Preferably, the BIP gateway may further be used for sending a notice message to a UICC and opening a channel between communication processor and the UICC after receiving a channel opening request from the UICC, wherein the notice message may be used for indicating a connection to be established.

Preferably, the BIP gateway may further be used for converting data in a predefined format from the proxy server module into data in a BIP format, and sending the data in the BIP format to the UICC through the channel; and the BIP gateway may further be used for converting data in a BIP format from the UICC into data in a predefined format, and sending the converted data in the predefined format to the proxy server module via the multiplexing channel.

Preferably, the BIP gateway may further be used for receiving a channel closing request from a UICC and closing a channel; the BIP gateway may further be used for notifying the second multiplexing module to close the multiplexing channel and sending a command for indicating that the connection is closed to the proxy server module; and the proxy server module may further be used for notifying the first multiplexing module to close the multiplexing channel after receiving the command for indicating that the connection is closed.

By adding a multiplexer (MUX) module in a terminal and transmitting data by the MUX module, the disclosure solves the problem of slow website display speed caused by the achievement of an SCWS with an AT command and thereby realizes a fast Web data transmission in the terminal.

### BRIEF DESCRIPTION OF THE DRAWINGS

Fig. 1 is a structural diagram illustrating a terminal disclosed in the prior art which accesses a WEB server built in a UICC via an AT command;
Fig. 2 is a flow chart illustrating a method for data transmission according to an embodiment of the disclosure;
Fig. 3 is a systemic structural diagram illustrating a terminal according to an embodiment of the disclosure;
Fig. 4 is a structural diagram illustrating a terminal which is connected with an application processor and a communication processor via an MUX module and accesses a UICC WEB server according to an embodiment of the disclosure;
Fig. 5 is a flow chart illustrating an access to a WEB server built in a UICC according to an embodiment of the disclosure; and
Fig. 6 is a structural diagram illustrating a terminal according to an embodiment of the disclosure.

### DETAILED DESCRIPTION

Aiming to the problem of slow website display caused by the achievement of an SCWS via an AT command in the prior art, an improved data transmission scheme is provided in an embodiment of the disclosure which implements a processing according to the following steps: a communication processor receives a connection establishment request from an application processor via an AT command; the communication processor sends the application processor an AT response for indicating that the connection establishment is successful and instructs an MUX module of the application processor to allocate an MUX channel by the AT response; an MUX module of the communication processor allocates an MUX channel; and the communication processor performs data transmission with the application processor through the MUX channel.

It should be noted that embodiments of the disclosure and features thereof can be combined with each other if no conflict is caused. The disclosure will be described in detail by reference to the accompanying drawings in combination with embodiments.

In the following embodiments, the steps shown in the flow charts of the drawings can be executed in, for example, a computer system consisting of a group of instruction-executable computers; moreover, although a logic order is shown in a flow chart, the shown or described steps can be executed in a different order in some cases.

In accordance with an embodiment of the disclosure, a method for data transmission is provided. Fig. 2 is a flow chart illustrating a method for data transmission according to an embodiment of the disclosure; as shown in Fig. 2, the method comprises the following steps S202-S208.

Step S202: a communication processor receives a connection establishment request from an application processor.

Step S204: the communication processor sends the application processor an AT response for indicating that the connection establishment is successful and instructs an MUX module of the application processor to allocate an MUX channel via the AT response, that is, after the application processor receives the AT response, the MUX module of the application processor allocates the MUX channel.

Step S206: an MUX module of the communication processor allocates an MUX channels.

Step S208: the communication processor performs data transmission with the application processor through the MUX channel.

After step S202 is executed, the communication processor sends a notice message to a UICC according to the connection establishment request, the UICC sends a channel opening request to the communication processor after receiving the notice message, and the communication processor opens a channel to the UICC.

Wherein a data conversion should be performed by the communication processor between the application processor and the UICC, which comprises that: the communication processor receives data in a predefined format from the application processor via the MUX channel, and converts the data in the predefined format into data in a BIP format; the communication processor sends the data in the BIP format to the UICC via the channel to the UICC; and the communication processor receives data in the BIP format from the UICC via the channel to the UICC and converts the data in the BIP format into data in a predefined format; and the communication processor sends the data in the predefined format to the application processor.

After the data transmission is completed, an established connection needs to be closed; the flow comprises the following steps.

Step A: the communication processor receives a channel closing request from the UICC and closes a channel.

Step B: the communication processor closes the MUX channel and sends the application processor an AT command for indicating that the connection is closed in order to close the MUX channel for the application processor according to the AT command.

Step C: the application processor closes the MUX channel after receiving the AT command.

The realization process of an embodiment of the disclosure will be described in detail in combination with specific examples.

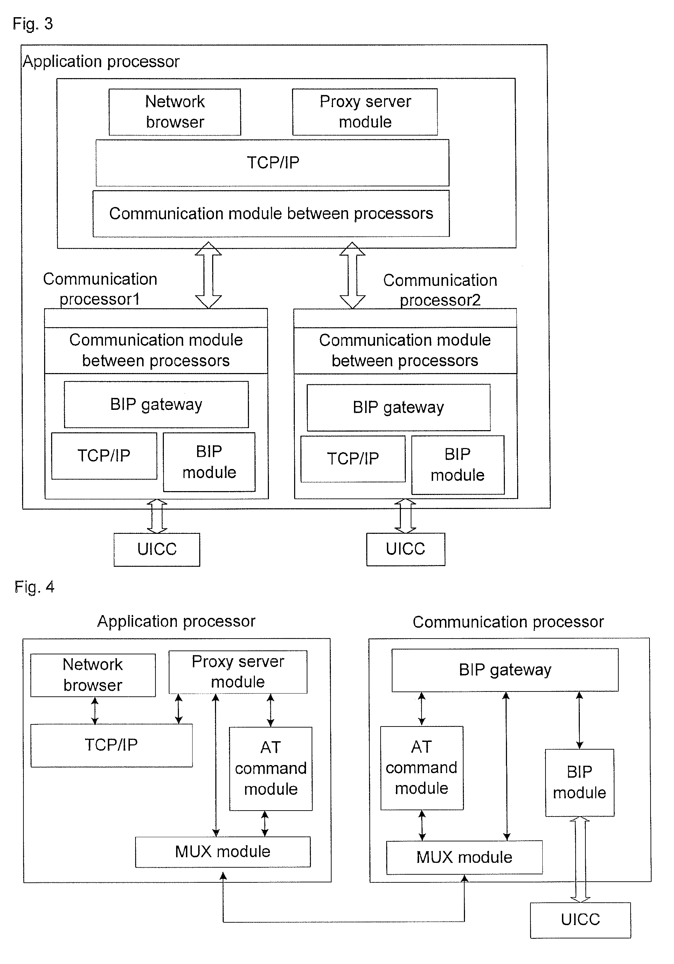

Fig. 3 is a systemic structural diagram illustrating a terminal according to an embodiment of the disclosure; as shown in Fig. 3, the mobile terminal comprises an application processor, one or more communication processors, a UICC and channels between the processors, wherein the application processor comprises the following components: a network browser, a TCP/IP protocol stack, a proxy server module and communication modules (may be AT command modules and/or MUX modules) between processors, and each communication processor comprises a TCP/IP protocol stack (this module is optional), a BIP gateway, a BIP module and communication modules (may be AT command modules and/or MUX modules) between the processors.

It should be noted that there may be many kinds of physical channels between the processors. The following example takes for example but is not limited to serial ports.

### Example 1

Fig. 4 is a structural diagram illustrating a terminal which is connected with an application processor and a communication processor via an MUX module and accesses a UICC WEB server according to an embodiment of the disclosure; as shown in Fig. 4, the terminal uses MUX modules during data transmission. By taking a connection between an application processor and a communication processor as an example, this example will be described. The application processor comprises: a network browser, a TCP/IP protocol stack, a proxy server module (located in a proxy server), an AT command module and a multiplexer module; and the communication processor comprises: an AT command module, an MUX module, a BIP gateway and a BIP module, wherein the BIP gateway may have functions of the BIP module.

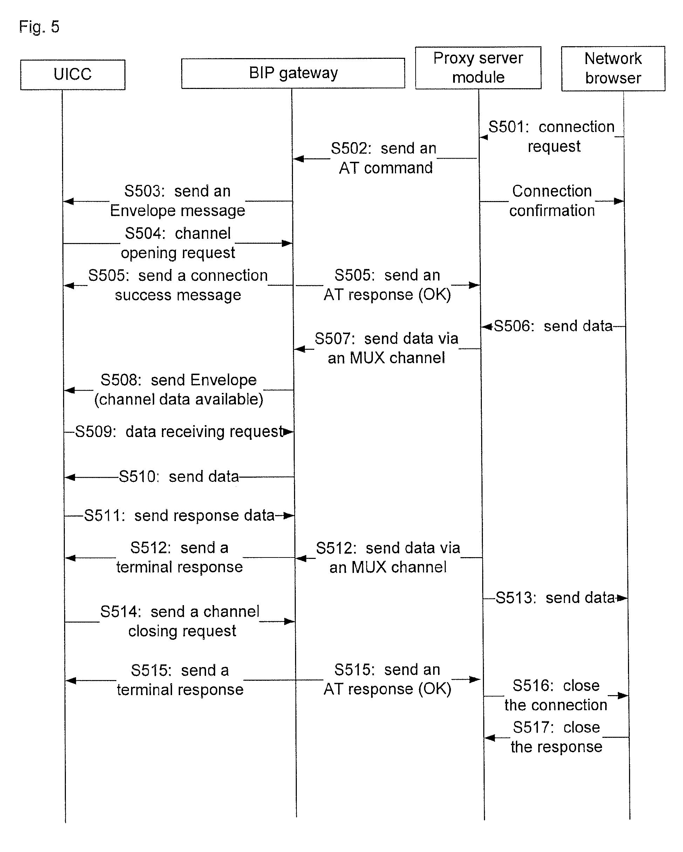

Fig. 5 is a flow chart illustrating an access to a WEB server built in a UICC according to an embodiment of the disclosure. The flow shown in Fig. 5 will be described in detail based on the structure shown in Fig. 4; as shown in Fig. 5, this flow can be divided into the following two parts: Part 1 refers to the establishment/closing of a transmission channel between an AP and a CP via an AT command, and this part specifically corresponds to the following steps 1 and 4; and Part 2 refers to data transmission between the AP and the CP via an MUX channel, and this part specifically corresponds to the following steps 2 and 3. Steps 1-4 will be described in detail in combination with Fig. 5.

Step 1: a network browser establishes a connection with a UICC; this step specifically comprises the following steps S501-5505, which will be described in detail.

Step S501: a user inputs, on a network browser, http://127.0.0.1:port (wherein port corresponds to a port of the UICC which provides a certain service; it cannot input a port number rather than directly input http://127.0.0.1 if default port 80 is used); the user can also replace manually inputting the above-mentioned address with selecting a bookmark pointing to http://127.0.0.1:port preset in the browser, or can further complete the above-mentioned step by means of accessing a menu of an SCWS by accessing a calling browser in a SIM Took Kit (STK) menu of the UICC; then, the network browser sends, via a TCP/IP protocol stack, a connection request that is transmitted in accordance with the TCP/IP protocol.

Step S502: the proxy server module receives the connection request and establishes a connection with the browser; meanwhile, the proxy server module converts the connection request into a connection request transmitted in accordance with an AT command and sends %WEBOPCH=port to the CP to request the CP to establish a connection.

Step S503: the BIP gateway converts the connection request transmitted in accordance with the AT command into a connection request transmitted in accordance with a BIP protocol and requests the BIP module at the CP side to establish a connection with the UICC; and the BIP gateway notifies the UICC of a connection event via a local connecting envelope message (Envelope (local connecting)).

Step S504: after receiving the notice, the UICC sends a channel opening request (Fetch: open channel) to the BIP gateway.

Step S505: after receiving the channel opening request, the BIP gateway returns a connection success message (terminal response) including a channel identifier (channel ID) to the UICC, sends an MUX channel allocation command to an MUX module at the CP side, and synchronously returns an AT response (OK) for indicating that the connection establishment is successful to the proxy server module; and the proxy server module sends an MUX channel allocation command to the MUX module at the AP side, and establishes an MUX channel for data transmission between the AP and the CP.

Step 2: the network browser sends request data to the UICC; this step specifically comprises the following steps S506-S510, which will be described in detail.

Step S506: the network browser sends access data transmitted in accordance with TCP/IP protocol to the proxy server module.

Step S507: the proxy server module converts the access data transmitted in accordance with TCP/IP protocol into data in a Port+data format and sends the converted data to the BIP gateway at the CP side via an MUX channel; and the BIP gateway converts the access data into data in a format supported by the BIP protocol and gets the converted data ready for transmission to the UICC.

Step S508: the BIP gateway sends a channel data available envelope message (Envelope (channel data available)) to notify the UICC that there is access data.

Step S509: the UICC returns a data receiving request (Fetch: receive data) to request to receive the access data.

Step S510: the BIP gateway sends the access data to the UICC via a terminal response (Terminal response (data)).

Step 3: the UICC sends the response data to the network browser; this step specifically comprises the following steps S511-S513, which will be described in detail.

Step S511: the UICC sends the BIP gateway the response data transmitted in accordance with BIP protocol, that is, the UICC sends the response data to the BIP gateway via a data sending request (Fetch: send data).

Step S512: after receiving the response data, the BIP gateway notifies, via a terminal response (Terminal response), the UICC that the response data is received, and then transmits the response data in port+data format to the proxy server module at the AP side via the MUX channel.

Step S513: after receiving the response data, the proxy server module converts the response data transmitted in the form of an AT command into data transmitted in accordance with TCP/IP protocol and returns the converted data to the network browser via the TCP/IP protocol stack; and the browser parses a Hypertext Transfer Protocol (HTTP) data packet and then displays the analyzed data on the network browser.

Steps 2 and 3 may be executed repeatedly until all the data on the UICC are sent.

Step 4: the connection is closed; this step specifically comprises the following steps S514-S517, which will be described in detail.

Step S514: the UICC sends a channel closing request including a channel identifier (Fetch: close channel (channel ID)) to the BIP gateway to request the BIP gateway to close the channel.

Step S515: after closing the connection, the BIP gateway confirms that the channel is closed by sending a terminal response (Terminal response (channel status: link not established)) to the UICC, sends an MUX channel closing command to the MUX module at the CP side, and synchronously sends an AT command, i.e., AT+WEBCIS=<port>, to the proxy server module to notify the AP that the connection has been closed.

Step S516: the proxy server module returns a connection closing message to the network browser via the TCP/IP protocol stack and sends an MUX channel closing command to the MUX module at the AP side to close the MUX channel.

Step S517: the browser sends a closing response.

Based on the above-mentioned instance, the MUX channel between the AP and the CP for transmitting data realizes a faster and more stable transmission rate, and additionally, can also support the synchronous transmission of the data of a plurality of requests.

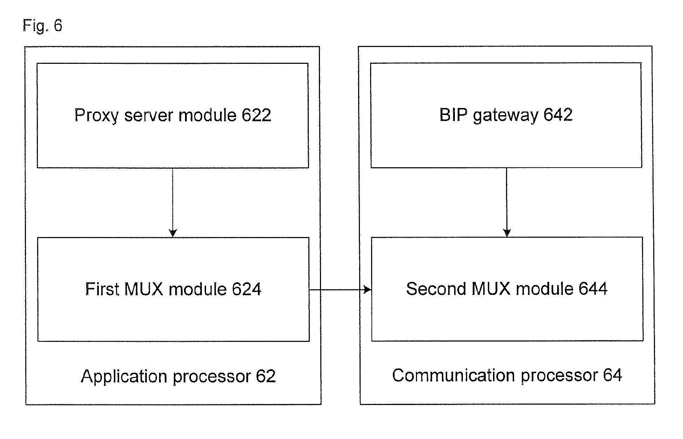

In accordance with an embodiment of the disclosure, there is provided a terminal which comprises an application processor 62 and a communication processor 64. Fig. 6 is a structural diagram illustrating the terminal provided in this embodiment; as shown in Fig. 6, the application processor 62 comprises a proxy server module 622 and a first MUX module 624, and the communication processor 64 comprises a BIP gateway 642 and a second MUX module 644. The function of each module will be illustrated in detail.

The BIP gateway 642 is used for receiving a connection establishment request from the proxy server module 622; the BIP gateway 642 is further used for sending a response for indicating that the connection establishment is successful to the proxy server module 622 and notifying the first MUX module 624 to allocate an MUX channel; the proxy server module 622 is used for receiving the response and notifying the second MUX module 644 to allocate an MUX channel; and the BIP gateway 642 is further used for performs data transmission with the proxy server module 622 through the MUX channel.

The BIP gateway 642 is further used for sending a notice message to a UICC and opening a channel between the BIP gateway and the UICC after receiving a channel opening request from the UICC, wherein the notice message is used for indicating a connection to be established.

The BIP gateway 642 is further used for converting data in a predefined format from the proxy server module 622 into data in a BIP format, and sending the data in the BIP format to the UICC through the channel; the BIP gateway 642 is further used for converting data in a BIP format from the UICC into data in a predefined format, and sending the converted data in the predefined format to the proxy server module 622 via the multiplexing channel.

Additionally, the BIP gateway 642 is further used for receiving a channel closing request from a UICC, closing a channel, notifying the second MUX module 644 to close the MUX channel, and sending the proxy server module 622 a command for indicating that the connection is closed; and the proxy server module 622 is further used for notifying the first MUX module 624 to close the MUX channel after receiving the command for indicating that the connection is closed.

It can be seen from the above-mentioned description that the disclosure achieves the following technical effects:
a fast speed, which is suitable for the transmission of a great amount of WEB service data. Because an AT command mechanism is designed for a use between a piece of data terminal equipment and a piece of data communication equipment and is realized by the use of an AT command and an AT response in pairs, however, the data transmission between a browser and a WEB server are not certainly in a one-to-one correspondence relationship; moreover, when being realized, a large AT command data should be divided into multiple commands to be transmitted because a single AT command is generally limited in size. In contrast, a multiplexing module transmitting data in a data stream form has no limitation in the size or the format of data, besides, since each MUX module has independent channel, there are various storage areas and stream controllers for supporting the synchronous transmission of different channels. Therefore, using MUX channels to transmit data can significantly improve transmission rate, increase the reliability of data transmission and realize data transmission for concurrent requests.

Apparently, it should be understood by those skilled in the art that, the above-mentioned modules or steps of the disclosure can be realized by a universal computing device, centralized on a single computing device or distributed on a network consisting of multiple computing devices, and optionally realized by program codes capable of being executed by a computing device, therefore, the modules or steps can be stored in a storage device to be executed by a computing device or be separately manufactured into integrated circuit modules, or some of the modules or steps are manufactured into a single integrated circuit module. Thus, the disclosure is not limited to any special combination of hardware and software.

The above-mentioned description is only one preferred embodiment of the disclosure but not limitation to the disclosure, and various modification and variations can be devised by those skilled in the art. Moreover, it should be understood that, any modification, equivalent and improvement made by those skilled in the art without departing from the spirit and essence of the disclosure belong to the protection scope of the disclosure.

## Claims

1. A method for data transmission, which is used in a terminal comprising a communication processor and an application processor, comprising:
receiving a connection establishment request from an application processor by a communication processor;
sending a response for indicating that the connection establishment is successful to the application processor and instructing the application processor to allocate a multiplexing channel via the response by the communication processor;
allocating a multiplexing channel by the communication processor; and
performing data transmission with the application processor through the multiplexing channel by the communication processor.

2. The method according to claim 1, wherein the step of instructing the application processor to allocate a multiplexing channel via the response comprises:
allocating the multiplexing channel by the application processor after receiving the response.

3. The method according to claim 2, further comprising: after receiving the connection establishment request by the communication processor,
sending a notice message to a Universal Integrated Circuit Card (UICC) according to the connection establishment request by the communication processor, wherein the notice message is used for indicating a connection to be established; and
opening a channel between the communication processor and the UICC by the communication processor after receiving a channel opening request from the UICC.

4. The method according to claim 3, wherein the step of performing data transmission with the application processor through the multiplexing channel by the communication processor comprises:
the communication processor receives data in a predefined format from the application processor via the multiplexing channel and converts the received data into data in a Bearer Independent Protocol (BIP) format; and
the communication processor sends the data in the BIP format to the UICC through the channel between the communication processor and the UICC.

5. The method according to claim 3, wherein the step of performing data transmission with the application processor through the multiplexing channel by the communication processor comprises:
the communication processor converts data in a BIP format into data in a predefined format after receiving the data in the BIP format from the UICC through the channel between the communication processor and the UICC; and
the communication processor sends the data in the predefined format to the application processor.

6. The method according to any of claims 1 to 5, further comprising: after performing data transmission with the application processor through the multiplexing channel by the communication processor,
receiving a channel closing request from a UICC and closing a channel between the communication processor and the UICC by the communication processor; and
closing the multiplexing channel and sending a command for indicating that the connection is closed to the application processor by the communication processor.

7. A terminal, comprising an application processor and a communication processor, wherein the application processor comprises a proxy server module and a first multiplexing module, and the communication processor comprises a BIP gateway and a second multiplexing module; wherein
the BIP gateway is used for receiving a connection establishment request from the proxy server module;
the BIP gateway is further used for sending a response for indicating that the connection establishment is successful to the proxy server module and notifying the first multiplexing module to allocate a multiplexing channel;
the proxy server module is used for receiving the response and notifying the second multiplexing module to allocate a multiplexing channel; and
the BIP gateway is further used for performing data transmission with the proxy server module through the multiplexing channel.

8. The terminal according to claim 7, wherein the BIP gateway is further used for sending a notice message to a UICC and opening a channel between the communication processor and the UICC after receiving a channel opening request from the UICC, wherein the notice message is used for indicating a connection to be established.

9. The terminal according to claim 8, wherein the BIP gateway is further used for converting data in a predefined format from the proxy server module into data in a BIP format, and sending the data in the BIP format to the UICC through the channel between the communication processor and the UICC; and
the BIP gateway is further used for converting data in a BIP format from the UICC into data in a predefined format, and sending the converted data in the predefined format to the proxy server module via the multiplexing channel.

10. The terminal according to any of claims 7 to 9, wherein
the BIP gateway is further used for receiving a channel closing request from a UICC and closing a channel between the communication processor and the UICC;
the BIP gateway is further used for notifying the second multiplexing module to close the multiplexing channel and sending a command for indicating that the connection is closed to the proxy server module; and
the proxy server module is further used for notifying the first multiplexing module to close the multiplexing channel after receiving the command for indicating that the connection is closed.
